# EUROPÄISCHE PATENTANMELDUNG

(11) **EP 1 038 743 A2**
(43) Veröffentlichungstag der Anmeldung: **27.09.2000**
(21) Anmeldenummer: 00104435.3
(22) Anmeldetag: 03.03.2000
(51) Int. Cl.: B60T 8/00

(54) **Vorrichtung zum Detektieren eines Bremsdruckausfalls an einer Fahrzeugachse einer Fahrzeugbremsanlage**

(30) Priorität: 24.03.1999 DE 19913381
(71) Anmelder: KNORR-BREMSE Systeme für Nutzfahrzeuge GmbH, 80809 München (DE)
(72) Erfinder: Gschossmann, Günther, 84514 Garching (DE); Mayr-Fröhlich, Mathias, 81243 München (DE)

(57) **Zusammenfassung**

Die Vorrichtung (1) erzeugt ein elektrisches Signal, das anzeigt, ob eine Bremsanforderung des Fahrers vorliegt und ob an der zu überwachenden Bremse ein Bremsdruck vorhanden ist. Dieses Signal wird mit einem vorgegebenen Referenzsignal verglichen, das anzeigt, ob das Fahrzeug tatsächlich abgebremst wird oder ungebremst ist.

## Beschreibung

Die Erfindung bezieht sich auf eine Vorrichtung zum Sensieren eines Bremsdruckausfalls gemäß dem Patentanspruch 1.

Moderne Nutzfahrzeuge sind üblicherweise mit einem Antiblockier-System (ABS) und mit einem automatisch-lastabhängigen Bremskraftregler (ALB) ausgestattet, der den Bremsdruck an der Fahrzeughinterachse entsprechend der momentanen Hinterachsbelastung regelt. Der ALB-Regler ist dabei so eingestellt, daß einerseits die verfügbare Hinterachsbremsleistung durch Einsteuern eines ausreichend hohen Bremsdrucks möglichst gut ausgenutzt wird und daß andererseits der Reifenverschleiß begrenzt wird, indem bei Überschreiten eines vorgegebenen Bremsschlupfes der Bremsdruck an den Hinterrädern abgeregelt wird.

Tritt an den Vorderachsbremsen ein Druckausfall auf, so muß aus Sicherheitsgründen an der Hinterachse eine möglichst hohe Restbremswirkung verfügbar sein, wobei dann ein größerer Hinterradschlupf bzw. stärkerer Reifenverschleiß an den Hinterrädern in Kauf genommen wird als bei ordnungsgemäßer Funktion der Bremsanlage. Der ALB-Regeler darf daher bei einem Druckausfall an der Vorderachse den Bremsdruck an der Hinterachse erst bei Erreichen einer gesetzlich vorgeschriebenen Mindestverzögerung des Fahrzeugs abregeln.

Aufgabe der Erfindung ist es, eine Vorrichtung zu schaffen, die eine zuverlässige Sensierung eines Bremsdruckausfalls an einer Fahrzeugbremse, insbesondere an den Vorderradbremsen eines Fahrzeugs ermöglicht.

Diese Aufgabe wird durch die Merkmale des Patentanspruches 1 gelöst.

Der Erfindung liegt die Idee zugrunde, ein elektrisches Signal zu erzeugen, das anzeigt, ob eine Bremsanforderung des Fahrers vorliegt und ob an der zu überwachenden Bremse ein Bremsdruck vorhanden ist, und dieses Signal mit einem Referenzsignal zu vergleichen, das den momentanen Fahrzustand anzeigt, d.h. ob das Fahrzeug tatsächlich abgebremst wird oder ungebremst ist.

Die Bremsanforderung des Fahrers kann durch einen mit einem Bremsgeber gekoppelten Bremsgeberschalter erfaßt werden, der beim Betätigen des Bremsgebers schließt. Der Bremsgeberschalter kann gleichzeitig zur Ansteuerung der Bremsleuchten verwendet werden und ist über einen im drucklosen Zustand der Bremse geschlossenen Bremsdruckschalter mit einem Meßanschluß einer Auswerteeinrichtung verbunden, die ein den beiden Schalterstellungen entsprechendes elektrisches Signal mit dem dem momentanen Fahrzustand zugeordneten vorgegebenen Referenzsignal vergleicht.

Der durch das Referenzsignal angezeigte gebremste bzw. ungebremste Fahrzustand wird dabei durch Auswerten von Raddrehzahlsignalen des Fahrzeugs ermittelt. Durch Vergleich von Raddrehzahlsignalen wird der an den Fahrzeugrädern auftretende Radschlupf bestimmt und daraus, ob das Fahrzeug gebremst oder ungebremst ist.

Der Vergleich des erzeugten Signals mit dem vorgegebenen Referenzsignal ermöglicht eine zuverlässige Erkennung eines Bremsdruckausfalls an der zu überwachenden Bremse bzw. an den zu überwachenden Bremsen einer Fahrzeugachse. Die erfindungsgemäße Vorrichtung ermöglicht außerdem eine permanente Funktionsüberwachung des Bremsdruckschalters und des Bremsgeberschalters. Während einer Bremsanforderung des Fahrers, d.h. bei geschlossenem Bremsgeberschalter ist zusätzlich eine Funktionskontrolle der Bremsleuchten möglich.

Ergibt der Vergleich des erzeugten Signals mit dem Referenzsignal eine Abweichung, so wird dies als Störung der Bremsanlage angesehen und die Auswerteeinrichtung erzeugt ein entsprechendes Warnsignal, das für eine entsprechende Anpassung einer lastabhängigen Bremskraftregelung der Fahrzeughinterachse verwendet werden kann, um eine ausreichende Restbremswirkung des Fahrzeugs sicherzustellen.

Nach einer Weiterbildung der Erfindung weist die Auswerteeinrichtung Steuerausgänge für eine lastabhängige Bremskraftregelung an der Hinterachse des Fahrzeugs auf. Ist das Fahrzeug mit einem ABS-System ausgestattet, so können die Steuerausgänge zur Steuerung der ABS-Ventile verwendet werden, was eine lastabhängige Bremskraftregelung allein mit der erfindungsgemäßen Vorrichtung und dem ohnehin vorhandenen ABS-System, d.h. ohne ein separates ALB-Ventil ermöglicht.

Im folgenden wird die Erfindung anhand von Ausführungsbeispielen im Zusammenhang mit der Zeichnung näher erläutert.

Es zeigen:
- Fig. 1: ein erstes Ausführungsbeispiel einer Vorrichtung gemäß der Erfindung;
- Fig. 2: einen möglichen Signalverlauf entsprechend dem Ausführungsbeispiel der Fig. 1;
- Fig. 3: ein Ausführungsbeispiel mit einem parallel zum Bremsdruckschalter geschalteten Widerstand; und
- Fig. 4: einen Signalverlauf entsprechend dem Ausführungsbeispiel der Fig. 3;

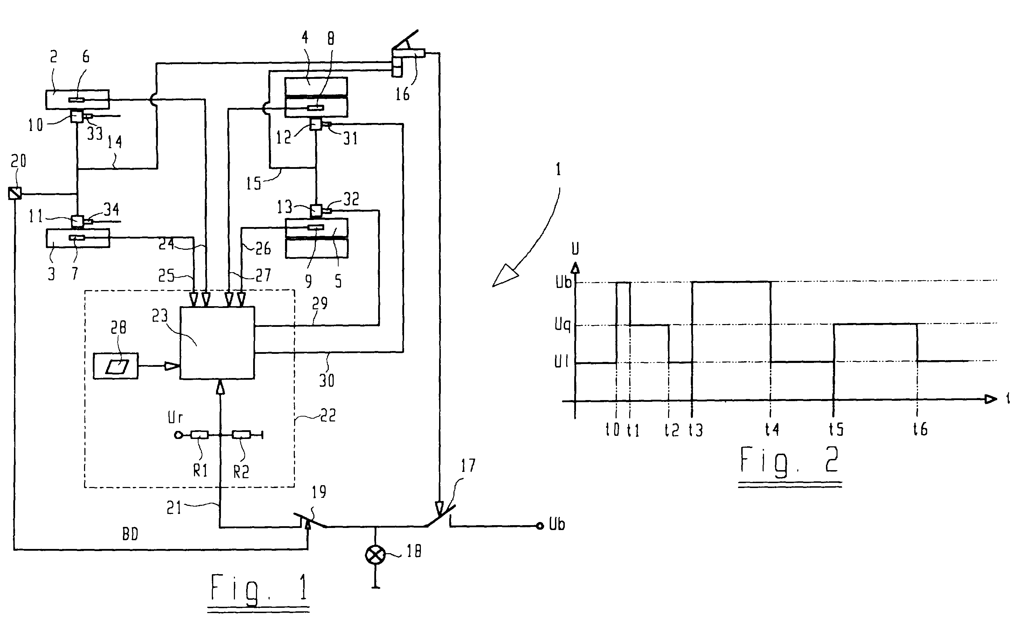

Fig. 1 zeigt eine Vorrichtung 1 zur Sensierung eines Bremsdruckausfalls an der Vorderachse eines Fahrzeugs, das hier durch Vorderräder 2 bzw. 3 und Hinterräder 4 bzw. 5 angedeutet ist. Den Vorderrädern 2, 3, und den Hinterrädern 4, 5 ist jeweils ein Raddrehzahlsensor 6-9 und je ein ABS-Ventil 10-13 zugeordnet. Den Bremsen (nicht dargestellt) der Vorderräder 2, 3 bzw. der Hinterräder 4, 5 wird zum Abbremsen des Fahrzeugs über Druckluftleitungen 14 bzw. 15 ein vom Fahrer über ein Betriebsbremsventil 16 vorgegebener Bremsdruck zugeführt, wobei die zugeordneten ABS-Ventile 10-13 den zugeführten Bremsdruck bei Bedarf derart begrenzen, daß ein Blockieren der Räder verhindert wird.

Tritt an den Fahrzeugvorderrädern 2 bzw. 3 ein Ausfall des Bremsdrucks auf, so muß dies feststellbar sein, um den Bremsdruck an den Hinterrädern 4 bzw. 5 zur Erreichung einer möglichst hohen Restbremswirkung zu erhöhen, was im folgenden näher erläutert wird.

Eine Spannungsquelle Ub ist über einen Bremsgeberschalter 17 mit einer Bremsleuchte 18 verbunden. Der Bremsgeberschalter 17 ist im Ruhezustand geöffnet und schließt beim Betätigen des Betriebsbremsventils 16, was zu einem Stromfluß von der Spannungsquelle Ub über den Bremsgeberschalter 17 und zum Aufleuchten der Bremsleuchte 18 führt.

Der Bremsgeberschalter 17 und die Bremsleuchte 18 sind ferner mit einem Bremsdruckschalter 19 verbunden, der im Ruhezsutand geschlossen ist. Der Ruhezustand entspricht einer ungebremsten Fahrt des Fahrzeugs, d.h. einem drucklosen Zustand der Vorderradbremsen. Der Druck an den Vorderrädern 2 bzw. 3 wird durch einen Drucksensor 20 gemessen. Ist an den Vorderrädern 2 bzw. 3 ein Bremsdruck vorhanden, so erzeugt der Drucksensor 20 ein elektrisches Signal BD, welches den Bremsdruckschalter 19 öffnet.

Der Bremsdruckschalter 19 ist ferner mit einem Meßanschluß 21 einer Auswerteeinrichtung 22 verbunden.

Die Auswerteeinrichtung 22 weist hier eine Referenzspannungsquelle Ur auf, die über einen ersten Spannungsteilerwiderstand R1 mit dem Meßanschluß 21 und weiter über einen zweiten Spannungsteilerwiderstand R2 mit Masse verbunden ist.

Der Meßanschluß 21 ist ferner mit einem Mikrorechner 23 verbunden, dem über Signalleitungen 24-27 Raddrehzahlsignale der Vorderräder 2, 3 bzw. der Hinterräder 4, 5 zugeführt werden, welche von den zugeordneten Raddrehzahlsensoren 6, 7 bzw. 8, 9 erzeugt werden. Ferner ist ein mit dem Mikrorechner 23 verbundener Speicher 28 vorgesehen. Der Mikrorechner 23 weist Steuerausgänge 29, 30 auf, die mit Steuereingängen 31 bzw. 32 der ABS-Ventile 12 bzw. 13 der Hinterräder verbunden sind.

Der Mikrorechner 23 kann weitere Steuerausgänge aufweisen, die mit Steuereingängen 33 und 34 der ABS-Ventile 10 bzw. 11 verbunden sind, und kann einen Steueralgorithmus zur Steuerung der ABS-Funktion des Fahrzeugs enthalten, worauf hier nicht näher eingegangen wird.

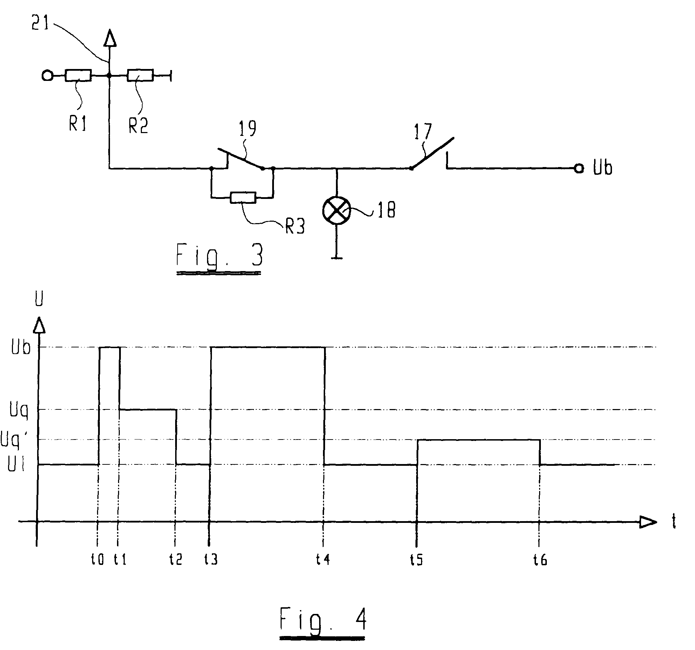

Im folgenden wird die Funktionsweise der in Fig. 1 gezeigten Vorrichtung 1 erläutert, wobei auf den in Fig. 2 gezeigten Signalverlauf des Meßanschlusses 21 Bezug genommen wird.

Bei ungebremster Fahrt befinden sich der Bremsgeberschalter 17 und der Bremsdruckschalter 19 in der in Fig. 1 gezeigten Grundstellung. In diesem Zustand fließt von der Referenzspannungsquelle Ur ein Strom über die Widerstände R1 und R2. Ferner fließt über den Widerstand R1 und den geschlossenen Bremdruckschalter 19 ein Strom durch die Bremsleuchte 18, der jedoch so klein ist, daß diese nicht leuchtet. Die Spannung Ur kann z.B. 5V betragen. In diesem Zustand hat der Meßanschluß 21 ein Potential Ul (Fig. 2).

Betätigt der Fahrer in einem Zeitpunkt t0 das Betriebsbremsventil 16, so schließt der Bremsgeberschalter 17, was zu einem Stromfluß von der Spannungsquelle Ub über den Bremsgeberschalter 17 zur Bremsleuchte 18 führt. Die Spannung der Spannungsquelle Ub ist dabei so groß, z.B. 24V, daß die Bremsleuchte 18 leuchtet.

Die Betätigung des Betriebsbremsventils 16 bewirkt bei ordnungsgemäßer Funktionsweise der Bremsanlage einen Druckaufbau an den Bremsen der Vorderräder 2, 3 bzw. der Hinterräder 4, 5, was jedoch mit einer gewissen Zeitverzögerung t0, t1 erfolgt. Während der Zeitspanne [t0, t1] ist der Bremsdruck an den Vorderrädern 2, 3 noch so klein, daß der Drucksensor nicht anspricht, so daß der Bremsdruckschalter 19 vorerst geschlossen bleibt, was dazu führt, daß der Meßanschluß 21 kurzzeitig das Potential der Spannungsguelle Ub hat.

Hat sich in einem Zeitpunkt t1 an den Bremsen der Vorderräder 2, 3 ein Bremsdruck aufgebaut und wird dieser vom Drucksensor 20 sensiert, so wird ein Bremsdrucksignal BD erzeugt, welches den Bremsdruckschalter 19 öffnet und die Verbindung zwischen dem Meßanschluß 21 und der Spannungsquelle Ub unterbricht. Dann stellt sich am Meßanschluß 21 das Potential Uq ein, das zwischen Ul und Ub liegt, wobei von der Referenzspannungsquelle Ur ein Strom über die Widerstände R1 und R2 fließt. Das Potential Uq wird nun solange gehalten, bis der Fahrer in einem Zeitpunkt t3 das Betriebsventil 16 losläßt und den Bremsvorgang beendet, was zum Öffnen des Bremsgeberschalters 17 führt. Gleichzeitig baut sich der Bremsdruck an den Vorderrädern 2 bzw. 3 ab, so daß der Bremsdruckschalter 19 schließt und sich am Meßanschluß 21 sich das Potential Ul einstellt.

Der Potential-Verlauf des Meßanschlusses 21 wird durch den Mikrorechner 23 mit einem Soll-Potentialverlauf verglichen, wobei überprüft wird, ob das Fahrzeug gebremst oder ungebremst ist. Der Mikrorechner 23 wertet dabei die von den Raddrehzahlsensoren 6-9 gelieferten Raddrehzahlsignale aus und bestimmt dabei beispielsweise die an den Fahrzeugrädern auftretenden Radschlüpfe oder Radverzögerungen und erkennt, ob das Fahrzeug beschleunigt, verzögert oder rollt. Anhand dieser Auswertung entscheidet der Mikrorechner 23 dann, ob das Fahrzeug durch Bremseingriff gebremst wird oder nicht.

Stellt der Mikrorechner 23 fest, daß das Fahrzeug ungebremst ist, so wird das Potential des Meßanschlusses 21 mit einem entsprechenden "Soll-Potential" für einen ungebremsten Fahrzustand verglichen, das im Speicher 28 gespeichert ist. Weicht das gemessene Potential vom Soll-Potential ab, so wird dies als Indiz für eine Störung in der Bremsanlage angesehen und der Mikrorechner 23 erzeugt ein Warnsignal. Die Störung kann z.B. durch einen Ausfall des Betriebsbremsventils und/oder des Drucksensors 20 und/oder des Bremsdruckschalters 19 und/oder des Bremsgeberschalters 17 und/oder durch einen Leitungsbruch verursacht sein.

Ermittelt der Mikrorechner 23 aus einer Auswertung der Raddrehzahlsignale, daß das Fahrzeug abgebremst wird, so wird das am Meßanschluß 21 vorhandene Potential bzw. der Potentialverlauf mit einem Soll-Potential bzw. mit einem Soll-Potentialverlauf für einen gebremsten Fahrzustand verglichen, das bzw. der ebenfalls im Speicher 28 abgelegt ist. Hierbei wird z.B. untersucht, ob der Potentialverlauf die für den ordnungsgemäßen Druckaufbau charakteristische Potentialänderung von Ub nach Uq aufweist.

Weicht das Potential am Meßanschluß 21 vom Soll-Potential für das gebremste Fahrzeug ab, so liegt eine Störung vor, wie z.B. ein Druckausfall an den Vorderrädern 2, 3. Der Mikrorechner 23 erkennt den Druckausfall und steuert die ABS-Ventile 12 und 13 der Hinterräder 4 bzw. 5 so, daß eine möglichst gute Restbremswirkung sichergestellt ist. Erst bei Überschreiten einer vorgegebenen Fahrzeugverzögerung, z.B. 2,5 m/s² greifen die ABS-Ventile 12 bzw. 13 ein und begrenzen den Bremsdruck an der Hinterachse.

Leitet der Fahrer im Zeitpunkt t3 erneut einen Bremsvorgang ein und ist beispielsweise der Drucksensor 20 ausgefallen, so bleibt der Bremsdruckschalter 19 trotz eines an der Vorderachse vorhandenen Bremsdrucks geschlossen, was zu einem Potentialsprung am Meßanschluß 21 von Ul auf Ub führt, wobei dann das Potential Ub während der gesamten Dauer [t3, t4] des Bremsvorganges gehalten wird. Eine Störung des Drucksensors 20 bzw. des Bremsdruckschalters 19 führt also ebenfalls zu einer Abweichung von dem in Fig. 2 zwischen den Zeitpunkten [t0, t2] gezeigten Soll-Potentialverlaufs, was durch den Mikrorechner 23 erkannt wird.

Betätigt der Fahrer im Zeitpunkt t5 das Betriebsbremsventil 16 und ist beispielsweise der Bremsgeberschalter 17 ausgefallen, so daß er in der geöffneten Ruhestellung bleibt, so springt das Potential des Meßanschlusses 21 nach Erreichen des Bremsdrucks an den Vorderrädern 2 bzw. 3, d.h. im Zeitpunkt t5 auf das Potential Uq. Die charakteristische "Potentialspitze" [t0-t1] fehlt somit bei einer Störung des Bremsgeberschalters 17, was ebenfalls durch den Mikrorechner 23 erkannt wird.

Fig. 3 zeigt ein Ausführungsbeispiel, bei dem parallel zum Bremsdruckschalter 19 ein Widerstand R3 geschaltet ist. Die übrige Schaltung entspricht der in Fig. 1 gezeigten. Bei ordnungsgemäßer Funktionsweise aller Komponenten der Bremsanlage ergibt sich analog zu Fig. 2 ein Potentialverlauf am Meßanschluß 21, der einen Potentialsprung von Ul auf Ub aufweist und dann bis zur Beendigung des Bremsvorganges Uq gehalten wird, wobei in diesem Fall ein Strom von der Spannungsquelle Ub über den Bremsgeberschalter 17, den Widerstand R3 und den Widerstand R2 fließen kann.

Ist der Bremsdruckschalter 19 defekt und bleibt dieser auch bei Vorhandensein eines Bremsdruckes geschlossen, so springt das Potential im Zeitpunkt t3 analog zu Fig. 2 auf den Wert Ub und wird bis zur Beendigung t4 des Bremsvorganges gehalten.

Ist hingegen der Bremsgeberschalter 17 defekt und bleibt dieser bei Betätigung des Bremsgebers 16 (Fig. 1) offen, so stellt sich am Meßanschluß 21 ein vom Potential Uq unterscheidendes Potential Uq' ein. Im Gegensatz zum Ausführungsbeispiel der Fig. 1 ist somit ein Ausfall des Bremsgeberschalters 17 allein anhand des Potentialpegels, d.h. ohne Betrachtung des zeitlichen Verlaufs des Potentials möglich.

Immer dann, wenn entweder die Vorderachse während der Bremsbetätigung drucklos ist oder wenn eine Komponente der Bremsanlage als defekt erkannt wird, liegt eine Abweichung des gemessenen Potentials des Meßanschlusses 21 von dem dem momentanen Fahrzustand zugeordneten Soll-Potential vor. Zur Sicherstellung einer möglichst guten Restbremswirkung und zur Einhaltung der gesetzlichen Vorschriften paßt der Mikrorechner 23 daher die ALB-Regelstrategie entsprechend an.

## Patentansprüche

1. Vorrichtung zum Sensieren eines Bremsdruckausfalls an einer Bremse einer Fahrzeugbremsanlage während einer Bremsanforderung des Fahrers, mit
einer Spannungsquelle (Ub), die über einen im Ruhezustand offenen und vom Fahrer durch Betätigen eines Bremsgebers (16) schließbaren Bremsgeberschalter (17) mit einem Verbraucher (18) verbunden ist,
einem mit dem Bremsgeberschalter (17) und mit dem Verbraucher (18) verbundenen Bremsdruckschalter (19), der im drucklosen Zustand der Bremse geschlossen und durch einen vorhandenen Bremsdruck öffenbar ist,
einer über einen Meßanschluß (21) mit dem Bremsdruckschalter (19) verbundenen elektronischen Auswerteeinrichtung (22, 23, 28), die ein am Meßanschluß (21) anliegendes elektrisches Signal mißt und die durch Vergleich von mittels Raddrehzahlsensoren (6-9) gemessenen Raddrehzahlsignalen einen gebremsten bzw. ungebremsten Fahrzustand erkennt und ein dem aktuellen Fahrzustand zugeordnetes vorgegebenes Soll-Signal mit dem am Meßanschluß (21) anliegenden Signal vergleicht.

2. Vorrichtung nach Anspruch 1,
**dadurch gekennzeichnet,**
daß ein Widerstand (R3) vorgesehen ist, der parallel zum Bremsdruckschalter (19) geschaltet ist.

3. Vorrichtung nach einem der Ansprüche 1 oder 2,
**dadurch gekennzeichnet,**
daß die Auswerteeinrichtung (22) einen geschlossenen Stromkreis mit einer Referenzspannungsquelle (Ur) und zwei Spannungsteilerwiderständen (R1, R2) aufweist, wobei der Meßanschluß (21) zwischen den beiden Spannungsteilerwiderständen (R1, R2) an den Stromkreis angeschlossen ist.

4. Vorrichtung nach einem der Ansprüche 1 bis 3,
**dadurch gekennzeichnet,**
daß die Auswerteeinrichtung einen Speicher (28) aufweist, in dem ein Soll-Signal für einen gebremsten Fahrzustand und ein Soll-Signal für einen ungebremsten Fahrzustand gespeichert sind.

5. Vorrichtung nach einem der Ansprüche 1 bis 4,
**dadurch gekennzeichnet,**
daß die Auswerteeinrichtung (22) den zeitlichen Verlauf des am Meßanschluß (21) anliegenden Signals mit einem vorgegebenen zeitlichen Soll-Signalverlauf vergleicht.

6. Vorrichtung nach einem der Ansprüche 1 bis 5,
**dadurch gekennzeichnet,**
daß die Auswerteeinrichtung (22) Steuerausgänge (29, 30) aufweist, die mit Steuereingängen (31, 32) von Hinterrädern (4, 5) des Fahrzeugs zugeordneten ABS-Ventilen (12, 13) verbunden sind, wobei die Auswerteeinrichtung (22) bei einem Bremsdruckausfall an Vorderadbremsen des Fahrzeugs durch Vergleich von Raddrehzahlsignalen mindestens eines Vorderrades (2, 3) mit den Hinterrädern (4, 5) die Radschlüpfe der Hinterräder (4, 5) ermittelt und in Abhängigkeit davon die ABS-Ventile (12, 13) der Hinterräder steuert.

7. Vorrichtung nach Anspruch 6,
**dadurch gekennzeichnet,**
daß die Auswerteeinrichtung (22) einen Regelalgorithmus enthält, für eine der Hinterachsbelastung entsprechenden Regelung des Bremsdrucks an den Hinterachsbremsen, wobei die Auswerteeinrichtung (22) den Hinterachsbremsdruck auch bei ordnungsgemäßer Funktionsweise der Bremsanlage regelt.

8. Vorrichtung nach einem der Ansprüche 6 oder 7,
**dadurch gekennzeichnet,**
daß die Auswerteeinrichtung (22) in eine ABS-Steuervorrichtung integriert ist.

9. Vorrichtung nach einem der Ansprüche 1 bis 8,
**dadurch gekennzeichnet,**
daß der Verbraucher (18) eine Bremsleuchte und der Bremsgeberschalter (17) ein Bremsleuchtenschalter ist.
